# FASCICULE DE BREVET EUROPEEN

(11) **EP 3 116 137 B1**
(45) Date de publication et mention de la délivrance du brevet: **26.06.2019**
(21) Numéro de dépôt: 16156149.3
(22) Date de dépôt: 17.02.2016
(51) Int. Cl.: H04B 3/54, H04L 1/00, H04L 27/26

(54) **PROCÉDÉ D'ESTIMATION D'UN CANAL DE TRANSMISSION CYCLO-STATIONNAIRE, ET RÉCEPTEUR CORRESPONDANT**
SCHÄTZVERFAHREN EINES ZYKLO-STATIONÄREN ÜBERTRAGUNGSKANALS, UND ENTSPRECHENDER EMPFÄNGER
METHOD FOR ESTIMATING A CYCLOSTATIONARY TRANSMISSION CHANNEL, AND CORRESPONDING RECEIVER

(30) Priorité: 09.07.2015 FR 1556488
(43) Date de publication de la demande: 11.01.2017
(73) Titulaire: STMicroelectronics (Rousset) SAS, 13790 Rousset (FR)
(72) Inventeur: DEMAJ, Pierre, 06200 Nice (FR); BOUVET, Yoann, 06650 Opio (FR)
(74) Mandataire: Casalonga

(56) Documents cités:
- US-A1- 2011 200 058
- US-A1- 2013 051 482
- Muharrem Ali Tunc: "LPTV-Aware Bit Loading and Channel Estimation in Broadband PLC for Smart Grid", , 31 mai 2014 (2014-05-31), pages 1-109, XP055266770, Extrait de l'Internet: URL:https://kuscholarworks.ku.edu/bitstrea m/handle/1808/15782/Tunc_ku_0099D_13443_DA TA_1.pdf?sequence=1&isAllowed=y [extrait le 2016-04-19]

## Description

Des modes de mise en oeuvre et de réalisation de l'invention concernent la transmission d'informations sur un canal de transmission, et notamment lorsque ce canal est une ligne électrique, la transmission d'informations par courant porteur en ligne (PLC : Power Line Communications), et plus particulièrement l'estimation de la fonction de transfert du canal de transmission.

Des modes de mise en oeuvre et de réalisation de l'invention sont compatibles notamment mais non exclusivement avec la norme PLC-G3 telle que définie par exemple dans la version d'avril 2015 du document de l'Alliance G3-PLC intitulé «Narrowband OFDM PLC specifications for G3-PLC networks » à laquelle l'homme du métier pourra se référer à toutes fins utiles.

La technologie de courant porteur en ligne vise à transmettre des données numériques en exploitant l'infrastructure existante du réseau électrique. Elle permet notamment le relevé à distance de compteurs électriques, les échanges entre véhicules électriques et les bornes de recharge ou encore la gestion et le contrôle des réseaux d'énergie (smart grid)

La technologie de courant porteur en ligne (PLC) incorpore notamment la communication par courant porteur en ligne bande étroite (Narrow band Power line Communication : N-PLC) qui est généralement définie comme une communication sur une ligne électrique opérant à des fréquences de transmission jusqu'à 500 KHz.

La communication N-PLC utilise ainsi généralement les bandes de fréquences définies notamment par le comité européen de normalisation électrotechnique (CENELEC) ou par la Commission Fédérale des Communications (FCC).

Ainsi si l'on considère la bande de fréquences CENELEC A (3-95 kHz), les fréquences de transmission se situent entre 35 et 91 KHz pour la norme PLC-G3.

La performance globale d'un récepteur dépend fortement de la qualité de son estimation de canal, c'est-à-dire de l'estimation de la fonction de transfert de ce canal.

Il est connu qu'un canal de transmission peut varier en temps, en fréquence, en phase et en amplitude.

Par ailleurs les signaux véhiculés par courant porteur en ligne et reçus par le récepteur résultent d'une combinaison de plusieurs signaux ayant emprunté au sein du canal de transmission (la ligne électrique) plusieurs chemins ou trajets de propagation ayant chacun son propre retard temporel et sa propre atténuation (le canal de transmission est un canal de transmission multi-trajets). Il peut alors en résulter une forte atténuation de certaines fréquences.

Par ailleurs, les propriétés et caractéristiques des réseaux électriques ne sont pas connues a priori et sont variables dans le temps. Ainsi les impédances de certains objets branchés par l'utilisateur varient avec la tension. C'est le cas par exemple des lampes halogènes ou des objets comportant des redresseurs de tension.

Lorsqu'un utilisateur branche de tels objets il en résulte alors une variation périodique de la fonction de transfert du canal de transmission. Le canal est alors considéré comme linéaire et cyclo-stationnaire ou « linéaire et variant temporellement de façon périodique », ce qui correspond à l'acronyme anglosaxon LPTV (« Linear Periodically Time Varying »).

Les récepteurs actuels, compatibles avec la norme PLC-G3, ne sont pas adaptés pour effectuer des estimations de canal lorsque celui-ci est temporellement variable. En effet, la norme PLC-G3 ne prévoit d'utiliser que deux symboles OFDM en tant que symboles pilotes pour estimer totalement la fonction de transfert du canal.

Aussi, lorsque le canal varie, et notamment lorsqu'on est en présence d'un canal cyclo-stationnaire, l'estimation du canal est erronée, voire impossible, et conduit par conséquent à des erreurs de décodage des symboles.

Le document US 2011/200058 A1 propose un système de communication numérique qui aborde les problèmes associés à la communication sur des canaux en présence de divers types de bruit et d'altération des canaux. Le système de communication numérique utilise plusieurs techniques pour lutter contre le bruit et la dégradation des canaux (par exemple, un canal PLC). Ces techniques comprennent notamment un schéma d'estimation périodique des canaux.

Selon un mode de mise en oeuvre et de réalisation, il est proposé une estimation de canal relativement simple applicable à un canal considéré comme cyclo-stationnaire, et compatible avec la norme PLC-G3.

Différents aspects de l'invention sont définis dans les revendications indépendantes 1 et 13.

Des modes particuliers de mise en oeuvre et de réalisation sont définis dans les revendications dépendantes.

Selon un aspect, il est proposé un procédé de traitement d'un signal analogique de canal issu d'un canal de transmission (par exemple une ligne électrique, le signal étant alors véhiculé par courant porteur de ligne (PLC)), le signal analogique de canal véhiculant des trames (TRM) de symboles, et le canal de transmission étant considéré comme étant linéaire et cyclo-stationnaire pour toute la durée d'au moins une trame ;
le procédé selon cet aspect comprend
une conversion analogique/numérique du signal analogique de canal de façon à obtenir un signal numérique de canal,
une pluralité d'estimations de canal effectuées pour ladite au moins une trame à partir du signal numérique de canal de façon à élaborer une séquence de N fonctions de transfert du canal de transmission respectivement associées à N tranches temporelles successives, la durée totale des N tranches temporelles étant égale à la quasi-totalité de la période de cyclo-stationnarité du canal ou à la totalité de ladite période, et
un décodage de certains au moins des symboles de ladite au moins une trame en utilisant pour chacun de ces symboles la fonction de transfert associée à la tranche temporelle contenant ledit symbole.

La durée totale des N tranches temporelles est légèrement supérieure à période de cyclo-stationnarité lorsque celle-ci n'est pas un multiple entier de la durée d'une tranche temporelle. Ainsi dans ce cas cette période de cyclo-stationnarité est comprise entre N fois et N+1 fois la durée d'une tranche temporelle.

La durée totale des N tranches temporelles est égale à la période de cyclo-stationnarité lorsque celle-ci est un multiple entier de la durée d'une tranche temporelle

Le signal analogique de canal qui va subir la conversion analogique/numérique peut être par exemple le signal analogique directement issu du canal ou bien comme c'est généralement le cas, le signal analogique délivré par un étage d'entrée analogique (comportant notamment des filtres passe-bande, des filtres passe-bas et un amplificateur) connecté sur le canal de transmission.

Le signal analogique de canal est par exemple conforme à la norme PLC-G3.

Le canal est considéré comme cyclo-stationnaire pour toute la durée de ladite au moins une trame.

Bien entendu le canal peut être cyclo-stationnaire au cours de plusieurs trames, successives ou non, et dans ce cas on applique avantageusement les différentes étapes du procédé mentionnées ci-avant pour chacune de ces trames, l'état du canal lors de la réception de chacune de ces trames, étant considéré comme cyclo-stationnaire pour toute la durée de la trame considérée.

L'élaboration de la séquence des N fonctions de transfert comprend une élaboration d'une séquence initiale de M fonctions de transfert respectivement associées à M symboles de référence successifs de ladite au moins une trame, les M symboles de référence couvrant temporellement une durée égale ou légèrement supérieure à la totalité de ladite période de cyclo-stationnarité, les N fonctions de transfert étant issues de ces M fonctions de transfert.

La durée totale des M symboles de référence est légèrement supérieure à période de cyclo-stationnarité lorsque celle-ci n'est pas un multiple entier de la durée d'un symbole de référence. Ainsi dans ce cas cette période de cyclo-stationnarité est comprise entre M-1 fois et M fois la durée d'un symbole de référence.

La durée totale des M symboles de référence est égale à la période de cyclo-stationnarité lorsque celle-ci est un multiple entier de la durée d'un symbole de référence.

A titre d'exemple, lorsque le signal est conforme à la norme PLC-G3, le nombre M de symboles de référence peut être égal à 15 et s'étendent alors ensemble sur une durée égale à 10,42 ms (puisque chaque symbole de référence a une durée égale à 0,695 ms). Cette durée totale de 10,42 ms est légèrement supérieure à la période de cyclo-stationnarité éventuelle du canal (10 ms) qui est égale à la moitié de la période du courant alternatif destiné à circuler sur la ligne électrique (soit 20 ms pour une fréquence de 50 Hz).

De la même manière, dans les pays où la fréquence du secteur est 60 Hz, la période de cyclo-stationnarité du canal est égale à 8,33ms et le nombre M de symboles de référence peut être pris égal à 12.

Alors qu'il serait possible d'utiliser quatorze de ces quinze fonctions de transfert pour le décodage des symboles du champ utile « payload ») de la trame, il s'avère préférable, pour obtenir un meilleur rapport signal sur bruit, d'utiliser seulement sept fonctions de transfert (N=7)

Ainsi N est inférieur à M et les N fonctions de transfert peuvent être par exemple les moyennes de groupes successifs de certaines au moins des M fonctions de transfert successives de ladite séquence initiale.

Lorsque M est égal à 15 et que N est égal à 7, les N fonctions de transfert peuvent ainsi être les moyennes deux à deux de quatorze fonctions de transfert successives de ladite séquence initiale.

Du côté émission, le signal analogique de canal est issu d'une conversion numérique/analogique d'un signal numérique initial, et lorsque la fréquence d'échantillonnage du signal numérique de canal (en réception) est différente de la fréquence d'échantillonnage du signal numérique initial (en émission), il est préférable de tenir compte de ce décalage de fréquence d'échantillonnage (« sampling frequency offset ») pour corriger les fonctions de transfert.

Ainsi, ladite pluralité d'estimations de canal comprennent des estimations de M fonctions de transfert de base respectivement effectuées à partir des M symboles de référence de ladite trame reçue, et un traitement de correction de ces M fonctions de transfert de base avec un déphasage correspondant à ce décalage de fréquence d'échantillonnage de façon à obtenir lesdites M fonctions de transfert.

Les symboles de référence de la trame reçue à partir desquels vont être déterminées les différentes fonctions de transfert, sont par exemple des symboles de la trame reçue correspondant à des symboles connus de la trame transmise et/ou sont des symboles décodables sans connaître la fonction de transfert du canal de transmission.

Ainsi, dans le cas de la norme PLC-G3, chaque trame reçue comporte un préambule suivi d'un en-tête suivi d'un champ utile, et les symboles de référence peuvent comprendre les symboles de l'en-tête d'une trame, qui sont décodables sans connaître la fonction de transfert de canal de transmission puisqu'ils sont codés de façon différentielle, ainsi que les deux symboles du champ utile (« payload ») de la trame qui correspondent aux deux symboles connus S1, S2 du champ utile de la trame transmise.

On notera donc ici que bien que la norme PLC-G3 ne prévoie comme symboles pilotes pour l'estimation de la fonction de transfert du canal, que deux symboles connus, à savoir les symboles S1 et S2, il est avantageusement prévu ici d'augmenter ce nombre de symboles pilotes en utilisant avantageusement les symboles de l'en-tête d'une trame qui sont décodables sans nécessiter de connaître la fonction de transfert du canal.

On peut alors aisément détecter les éventuelles variations temporelles du canal de transmission cyclo-stationnaire.

Cela étant il aurait été également possible d'utiliser également comme symboles de référence tout ou partie des symboles connus du préambule d'une trame afin d'améliorer l'estimation de canal ou augmenter le nombre d'estimations si la durée de l'en-tête et des symboles S1 et S2 est plus courte que la durée d'une demi-période du signal alternatif véhiculé par le canal (demi-période du secteur).

Selon un mode de mise en oeuvre, chaque estimation de canal effectuée à partir d'un symbole décodable reçu (un symbole de l'en-tête par exemple) comprend un décodage du symbole reçu, un réencodage de ce symbole décodé de façon à obtenir un symbole réencodé et une détermination de la fonction de transfert du canal à partir du symbole réencodé et du symbole décodable reçu

Le décodage des symboles suivant le dernier symbole de référence utilise alors avantageusement successivement et cycliquement les fonctions de transfert de la séquence des N fonctions de transfert (N=7 par exemple).

Lorsque la durée des N tranches temporelles est différente de la période de cyclo-stationnarité c'est-à-dire lorsque cette période de cyclo-stationnarité n'est pas un multiple entier de la durée d'un symbole, le décodage de symboles suivant le dernier symbole de référence comprend également périodiquement un décalage de fonction de transfert dans l'utilisation successive et cyclique des fonctions de transfert. Ainsi, par exemple, on pourra à un moment donné et périodiquement, utiliser deux fois de suite la même fonction de transfert avant de reprendre le cycle normal des fonctions de transfert.

Lorsque le signal est véhiculé par courant porteur de ligne, la période de cyclo-stationnarité du canal est égale à la moitié de la période du signal alternatif (courant ou tension) destiné à circuler sur ladite ligne électrique. Dans une telle application, un signal de référence est délivré à chaque franchissement de « 0 » du signal alternatif (il s'agit d'un signal connu par l'homme du métier sous la dénomination de signal de « zero-crossing »). Dans ce cas, la valeur de la période de cyclo-stationnarité du canal peut être avantageusement recalée à partir des occurrences dudit signal de référence.

Selon un autre aspect, il est proposé un récepteur, comprenant un étage d'entrée destiné à être connecté sur un canal de transmission et configuré pour délivrer un signal analogique de canal issu du canal de transmission, un étage de conversion analogique/numérique du signal analogique de canal pour délivrer un signal numérique de canal et des moyens de traitement dudit signal numérique de canal.

Selon une caractéristique générale de cet autre aspect, le signal analogique de canal véhiculant des trames de symboles et le canal de transmission étant considéré comme étant linéaire et cyclo-stationnaire pour toute la durée d'au moins une trame, les moyens de traitement comprennent
des moyens d'estimation configurés pour effectuer une pluralité d'estimations de canal pour ladite au moins trame à partir du signal numérique de canal de façon à élaborer une séquence de N fonctions de transfert du canal de transmission respectivement associées à N tranches temporelles successives, la durée totale des N tranches temporelles étant égale à la quasi-totalité de la période de cyclo-stationnarité du canal ou à la totalité de ladite période, et
des moyens de décodage configurés pour décoder certains au moins des symboles de ladite au moins une trame en utilisant pour chacun de ces symboles la fonction de transfert associée à la tranche temporelle contenant ledit symbole.

Selon un mode de réalisation, les moyens d'estimation comprennent des moyens d'élaboration configurés pour élaborer une séquence initiale de M fonctions de transfert respectivement associées à M symboles de référence successifs de ladite au moins une trame, les M symboles de référence couvrant temporellement une durée égale ou légèrement supérieure à la totalité de ladite période, et pour déterminer les N fonctions de transfert à partir de ces M fonctions de transfert.

Selon un mode de réalisation, le signal analogique de canal est issu d'une conversion numérique/analogique d'un signal numérique initial, et lorsque la fréquence d'échantillonnage du signal numérique est différente de la fréquence d'échantillonnage du signal numérique initial, les moyens d'élaboration sont en outre configurés pour effectuer des estimations de M fonctions de transfert de base respectivement à partir des M symboles de référence de ladite trame reçue, et un traitement de correction de ces M fonctions de transfert de base avec un déphasage correspondant à ce décalage de fréquence d'échantillonnage de façon à délivrer lesdites M fonctions de transfert.

Les moyens d'élaboration sont avantageusement configurés pour effectuer les moyennes de groupes successifs de certaines au moins des fonctions de transfert successives de ladite séquence initiale de façon à obtenir les N fonctions de transfert.

Selon un mode de réalisation, les symboles de référence de la trame reçue correspondent à des symboles connus de la trame transmise et/ou sont des symboles décodables sans connaître la fonction de transfert du canal de transmission.

Les moyens d'estimation sont avantageusement configurés pour effectuer un décodage d'un symbole décodable reçu, un ré-encodage de ce symbole décodé de façon à obtenir un symbole ré-encodé et une détermination de la fonction de transfert associée à ce symbole décodable reçu, à partir dudit symbole ré-encodé et dudit symbole décodable reçu.

Le signal est par exemple modulé selon une modulation OFDM.

Selon un mode de réalisation, le canal de transmission est une ligne électrique, le signal est destiné à être véhiculé par courant porteur de ligne et la période de cyclo-stationnarité éventuelle du canal est la moitié de la période du courant alternatif destiné à circuler sur ladite ligne électrique.

Le signal analogique de canal est par exemple conforme à la norme PLC-G3.

Dans ce cas, chaque trame reçue comporte un préambule suivi d'un en-tête suivi d'un champ utile et lesdits symboles de référence comportent par exemple les symboles de l'entête et deux symboles du champ utile correspondant à deux symboles connus de la trame transmise.

Lorsque M est égal 15, N est par exemple égal à 7, et les moyens d'élaboration sont configurés pour effectuer les moyennes deux à deux de quatorze fonctions de transfert successives de ladite séquence initiale de façon à obtenir les N fonctions de transfert.

Selon un mode de réalisation, les moyens de décodage sont configurés pour utiliser successivement et cycliquement les fonctions de transfert de la séquence des N fonctions de transfert de façon à décoder les symboles suivant le dernier symbole de référence.

Lorsque la durée des N tranches temporelles est différente de la période de cyclo-stationnarité, les moyens de décodage sont avantageusement configurés pour effectuer périodiquement un décalage de fonction de transfert dans l'utilisation successive et cyclique des fonctions de transfert de façon à décoder les symboles suivant le dernier symbole de référence comprend également.

Selon un mode de réalisation, le signal est destiné à être véhiculé par courant porteur de ligne, la période de cyclo-stationnarité du canal est la moitié de la période du courant alternatif destiné à circuler sur ladite ligne électrique, l'étage d'entrée est configuré pour délivrer en outre un signal de référence à chaque franchissement de zéro dudit courant alternatif, et les moyens d'estimation sont configurés pour recaler la valeur de la période de cyclo-stationnarité du canal à partir des occurrences dudit signal de référence.

D'autres avantages et caractéristiques de l'invention apparaîtront à l'examen de la description détaillée de modes de mise en oeuvre et de réalisation, nullement limitatifs, et des dessins annexés sur lesquels :

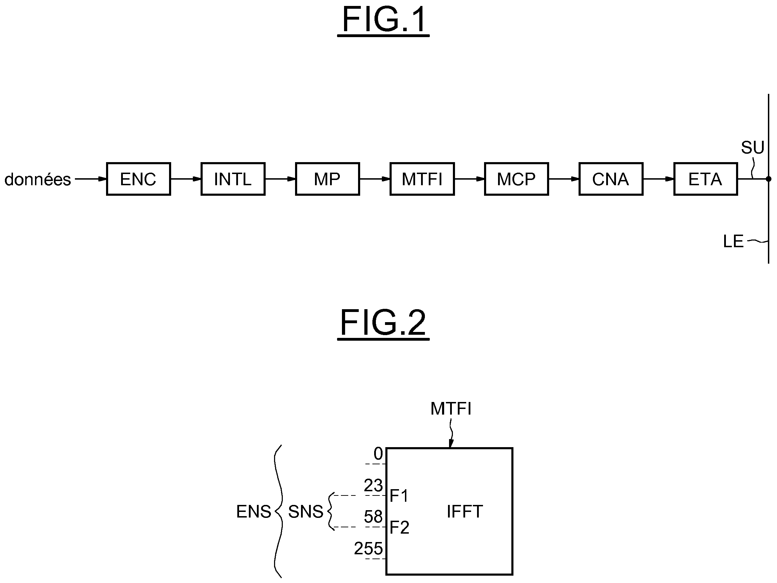

- les figures 1 à 14 illustrent schématiquement différents modes de mise en oeuvre et de réalisation de l'invention.

Les modes de mise en oeuvre et de réalisation qui vont maintenant être décrits le sont dans le cadre d'une transmission d'informations par courant porteur en ligne (CPL) conforme à la norme PLC-G3, bien que l'invention ne soit pas limitée à ce type d'application.

Dans tout ce qui suit, à chaque fois qu'on citera la norme PLC-G3, on supposera que l'on considère la bande de fréquences CENELEC A (3-95 kHz).

On se réfère maintenant à la figure 1 pour illustrer schématiquement un exemple d'émetteur capable de transmettre un signal utile SU sur une ligne électrique LE par courant porteur en ligne.

La chaîne de transmission comprend par exemple un encodeur ENC, par exemple un encodeur convolutionnel, recevant les données à transmettre de moyens de codage de source. Des moyens d'entrelacement INTL sont connectés à la sortie de l'encodeur et sont suivis par des moyens de « mappage » (mapping means) qui transforment les bits en symboles selon un schéma de transformation dépendant du type de modulation utilisée, par exemple une modulation de type BPSK ou plus généralement une modulation QAM.

Chaque symbole contient des coefficients de modulation associés à des porteuses qui vont être modulées en conséquence. Les symboles sont délivrés en entrée de moyens de traitement MTFI destinés à effectuer une opération de transformée de Fourier inverse rapide (IFFT).

On notera ici en se référant plus particulièrement à la figure 2, que les porteuses modulées forment un sous-ensemble SNS de porteuses parmi un ensemble ENS disponible de porteuses (ensemble qui correspond à la taille de la transformée de Fourier inverse).

Ainsi, dans la norme PLC-G3, la taille de la transformée de Fourier inverse est égale à 256 tandis que les porteuses modulées du sous-ensemble SNS sont comprises entre les rangs 23 et 58, ce qui correspond à une bande fréquentielle F1-F2 comprise entre 35,9375 et 90,625 KHz. La fréquence d'échantillonnage est ici égale à 400 KHz conduisant à un espacement entre les porteuses égal à 1,5625 KHz, ce qui rend ainsi les fréquences orthogonales (modulation OFDM).

Les coefficients de modulation associés aux porteuses non utilisées sont égaux à 0.

Le signal OFDM dans le domaine temporel est généré en sortie des moyens de traitement MTFI, et des moyens MCP rajoutent à chaque symbole OFDM dans le domaine temporel, un préfixe cyclique qui est une recopie en tête du symbole OFDM d'un certain nombre d'échantillons situés à la fin de ce symbole.

A titre d'exemple, dans la norme PLC-G3, la longueur du préfixe cyclique est de 30 échantillons pour une fréquence d'échantillonnage de 400 KHz.

Le signal est ensuite converti dans un convertisseur numérique/analogique CNA puis traité dans un étage ETA, communément désigné par l'homme du métier sous le vocable « Analog Front End », où il subit notamment une amplification de puissance, avant d'être transmis sur la ligne électrique LE.

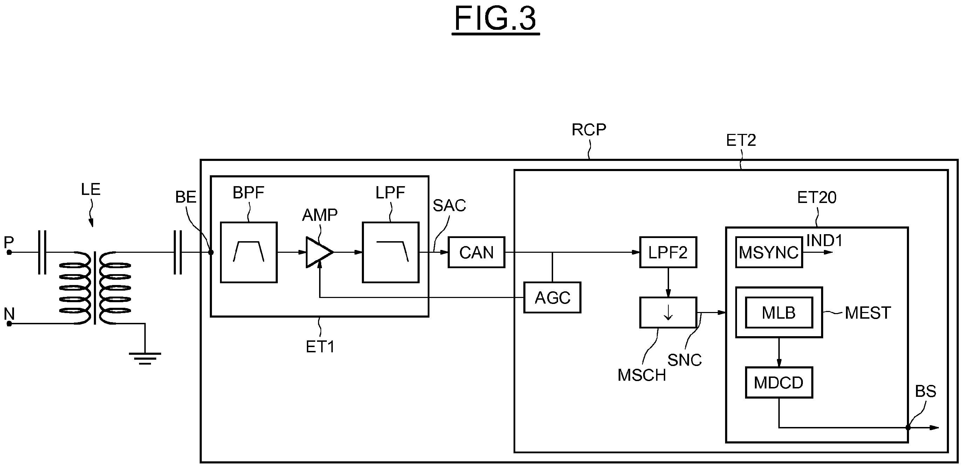

En réception, on voit, en se référant plus particulièrement à la figure 3, que le récepteur RCP comporte ici un étage d'entrée analogique ET1 dont la borne d'entrée BE est connectée sur la ligne électrique LE.

Cet étage d'entrée analogique ET1 comporte de façon classique un filtre passe bande BPF, un filtre passe bas LPF, ainsi que des moyens d'amplification AMP. La sortie de l'étage ET1 est connectée à un étage de conversion analogique/numérique CAN dont la sortie est connectée à l'entrée de moyens ou étage de traitement ET2.

L'étage de traitement ET2 comporte ici des moyens de contrôle automatiques de gain AGC permettant de contrôler la valeur du gain des moyens d'amplification AMP de l'étage ET1.

Le signal SAC délivré en sortie de l'étage analogique ET1 et en entrée de l'étage de conversion analogique/numérique CAN désigne un signal analogique de canal issu du canal de transmission (ligne électrique) LE.

L'étage de traitement ET2 comporte également un filtre passe bas LPF2 suivi, bien que cela ne soit pas indispensable, de moyens de sous-échantillonnage MSCH. La fréquence d'échantillonnage du signal en amont des moyens MSCH est notée Fs tandis que la fréquence d'échantillonnage du signal en sortie des moyens MSCH est notée Fss.

Le signal SNC en sortie des moyens MSCH désigne alors ici un signal numérique de canal qui est issu de la conversion analogique/numérique du signal analogique de canal SAC et sur lequel vont être appliqués notamment un traitement de synchronisation, des estimations de canal et des décodages de symboles comme on va le voir plus en détail ci-après.

Les estimations de canal sont effectuées une fois la synchronisation acquise.

La fréquence Fc désigne la fréquence de calcul à laquelle vont être effectués les différents traitements.

Dans la norme PLC-G3 par exemple, la fréquence d'échantillonnage Fs spécifiée est de 400 KHz pour une taille de FFT de 256.

Bien qu'il eût été possible d'effectuer toutes les opérations de ces différents traitements à une fréquence de calcul Fc égale à la fréquence d'échantillonnage Fs de 400 KHz, le fait de sous-échantillonner le signal à une fréquence Fss inférieure à Fs et d'effectuer toutes les opérations à la fréquence de calcul Fc égale à Fss permet de réduire la complexité d'implémentation de l'étage de traitement et permet également d'effectuer un traitement de transformée de Fourier rapide directe (FFT) ayant une taille réduite par rapport à la taille spécifiée de 256.

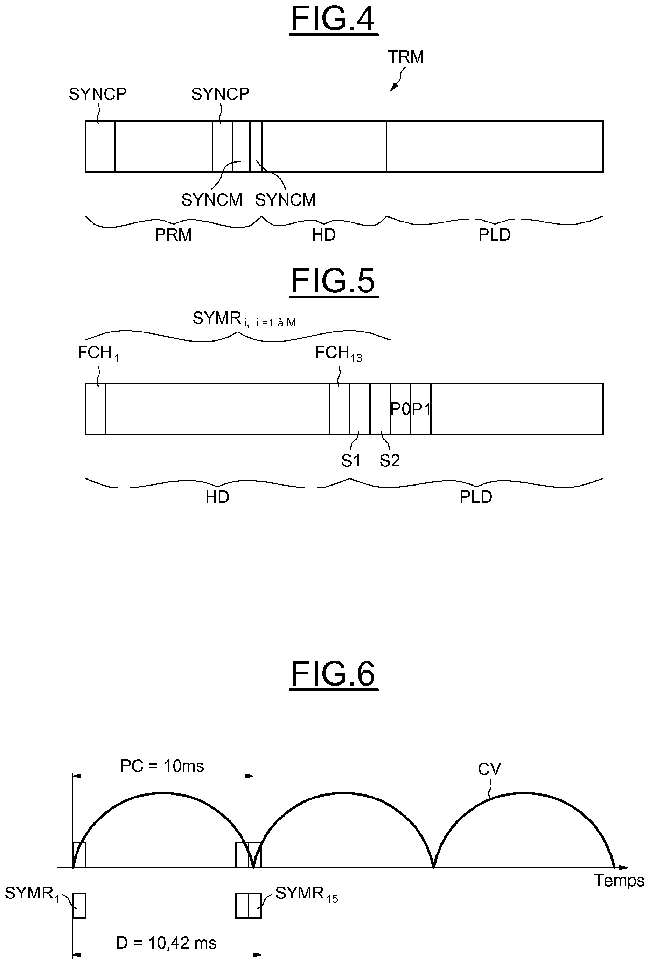

Avant de revenir plus en détail sur les différents moyens qui sont incorporés dans l'étage de traitement ET2, on se réfère maintenant plus particulièrement à la figure 4 pour illustrer la structure d'une trame véhiculant des symboles, par exemple dans le cadre de la norme PLC-G3.

La trame reçue TRM comprend un préambule PRM comportant ici huit symboles connus SYNCP suivis d'un symbole de phase opposée SYNCM lui-même suivi d'un demi-symbole SYNCM.

La trame TRM comporte ensuite un en-tête (header) HD suivi d'un champ utile PLD contenant des symboles de données utiles à décoder et plus connu par l'homme du métier sous la dénomination anglosaxonne de « payload ».

Les symboles de l'en-tête HD contiennent notamment des informations de contrôle pour le décodage des données du champ PLD ainsi que le nombre d'octets à décoder dans le champ PLD.

Le préambule PRM de la trame TRM permet au récepteur de se synchroniser c'est-à-dire d'obtenir une indication IND1 permettant de retrouver la structure de la trame afin de pouvoir repérer le début de l'en-tête HD.

Le canal de transmission est un canal linéaire c'est-à-dire qu'il se comporte comme un filtre linéaire.

On considère ici en outre que pour une trame considérée le canal est linéaire et cyclo-stationnaire (LPTV) pour toute ladite trame.

Le canal de transmission est cyclo-stationnaire lors de la réception d'une ou de plusieurs trames, en raison par exemple d'un branchement de lampes halogènes ou d'objets comportant des redresseurs de tension, sur la ligne électrique. Le canal est alors périodique en amplitude et en phase de façon synchronisée avec le courant ou la tension alternative présent sur la ligne électrique.

En d'autres termes, pour un canal cyclo-stationnaire, les caractéristiques de sa fonction de transfert varient au cours de la période de cyclo-stationnarité du canal mais se répètent ensuite périodiquement.

Sur la figure 6, on a représenté schématiquement par la courbe CV, les variations périodiques du canal et, sur cette figure, la référence PC désigne la période de cyclo-stationnarité du canal qui est égale à la moitié de la période du courant ou de la tension alternatif présent sur la ligne.

Ainsi, pour un courant et une tension alternatifs à 50 Hz, la période de cyclo-stationnarité PC du canal est égale à 10 ms.

Dans certaines applications pour lesquelles l'environnement électrique du canal est connu et comportant par exemple des objets du type lampe halogène et/ou redresseurs de tension connectés sur la ligne électrique, le canal de transmission peut être considéré *de facto* comme cyclo-stationnaire au cours des trames reçues.

Dans d'autres applications, la connaissance de l'état cyclo-stationnaire du canal au cours de la trame considérée peut résulter par exemple d'une détection préalable de l'état du canal, en particulier mais non limitativement celle décrite dans la demande de brevet français au nom de la Demanderesse, ayant pour titre «*Procédé de traitement d'un signal issu d'un canal de transmission, en particulier un signal véhiculé par courant porteur en ligne, et notamment l'estimation du canal, et récepteur correspondant*», et déposée le même jour que la présente demande de brevet.

Si l'on se réfère maintenant de nouveau à la figure 3, on voit que l'étage de traitement ET2 comporte un sous-étage ET20 incorporant différents moyens que l'on va maintenant décrire de façon fonctionnelle. Ces différents moyens peuvent être réalisés de façon logicielle au sein d'un microprocesseur par exemple, formant alors au moins en partie le sous-étage ET20.

Parmi ces différents moyens, on trouve de façon classique, des moyens de synchronisation MSYNC permettant au récepteur de se synchroniser c'est-à-dire d'obtenir ladite indication IND1 permettant de retrouver la structure de la trame afin de pouvoir repérer le début de l'en-tête HD.

Ces moyens de synchronisation peuvent être de structure classique et connue en soi ou bien, en variante, ceux incorporant les moyens de filtrage décrits dans la demande de brevet français n°1552588.

Parmi les autres moyens incorporés dans le sous-étage 20, on trouve des moyens d'estimation MEST configurés, comme on le verra plus en détails ci-après, pour effectuer une pluralité d'estimations de canal pour la trame considérée à partir du signal numérique de canal SNC de façon à élaborer une séquence de N fonctions de transfert du canal de transmission respectivement associées à N tranches temporelles successives, la durée totale des N tranches temporelles étant égale à la quasi-totalité de la période de cyclo-stationnarité (PC) du canal ou à la totalité de ladite période (PC).

Les moyens d'estimation comprennent ici des moyens d'élaboration MLB configurés, comme on le verra plus en détails ci-après, pour élaborer une séquence initiale de M fonctions de transfert respectivement associées à M symboles de référence successifs de la trame considérée, les M symboles de référence couvrant temporellement une durée égale ou légèrement supérieure à la totalité de ladite période, et pour déterminer les N fonctions de transfert à partir de ces M fonctions de transfert.

Des moyens de décodage MDCD de structure classique et connue en soi, sont alors configurés pour décoder certains au moins des symboles d'une trame, notamment les symboles du champ utile PLD de la trame, en utilisant pour chacun de ces symboles la fonction de transfert associée à la tranche temporelle contenant ledit symbole.

Là encore, on reviendra plus en détail ci-après sur ce décodage.

Si l'on se réfère maintenant plus particulièrement à la figure 5, on voit que l'en-tête HD de la trame reçue TRM comporte treize symboles FCH₁-FCH₁₃ qui ont été codés à l'émission de façon différentielle et qui sont chacun référencés par rapport au symbole précédent.

La trame TRM comporte par ailleurs au début du champ utile PLD, deux symboles correspondant à deux symboles transmis connus S1, S2. Cela étant à des fins de simplification on désignera également par S1 et S2 ces deux symboles reçus.

Les treize symboles FCHᵢ et les deux symboles S1 et S2 forment ici M symboles de référence SYMRᵢ (M est égal à 15 dans cet exemple).

Ces symboles de référence vont être utilisés pour effectuer les estimations de canal.

Si l'on se réfère de nouveau à la figure 6, on voit que, puisque chaque symbole de référence SYMRᵢ a dans la norme PLC-G3, une durée égale à 0,695 ms, l'ensemble des 15 symboles de référence SYMR₁-SYMR₁₅ s'étendent temporellement sur une durée totale égale à 10,42 ms qui est donc ici légèrement supérieure à la période de cyclo-stationnarité PC.

En d'autres termes, dans le cas présent, la période de cyclo-stationnarité PC n'est pas un multiple entier de la durée d'un symbole de référence et elle est comprise entre 14 fois 0,695ms et 15 fois 0,695ms.

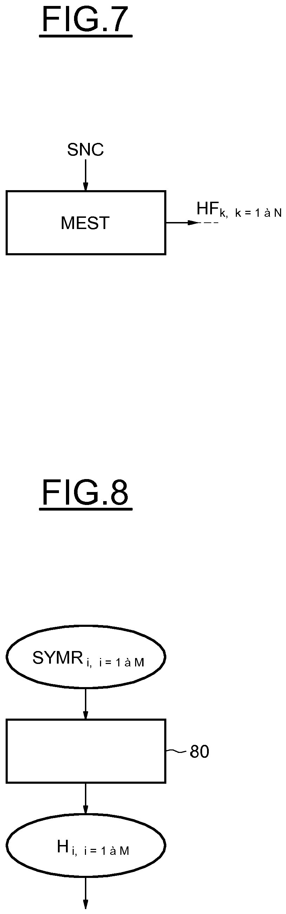

On va maintenant décrire plus en détail la phase d'estimation du canal en se référant plus particulièrement aux figures 7 à 11. Cette phase d'estimation est effectuée une fois la synchronisation du récepteur acquise.

Cette phase d'estimation est effectuée ici à chaque réception de trame pour laquelle le canal est cyclo-stationnaire, et l'on va maintenant décrire les traitements effectués au cours de l'une de ces trames.

Comme illustré sur la figure 7, une pluralité d'estimations de canal respectivement effectuées par les moyens d'estimation MEST à partir du signal numérique de canal SNC vont permettre d'obtenir les N fonctions de transfert du canal HFₖ respectivement associées aux N tranches temporelles mentionnées ci-avant.

A cet égard et de façon préférentielle, comme illustré sur la figure 8, les moyens d'élaboration MLB élaborent dans l'étape 80 une fonction de transfert Hᵢ du canal pour chaque symbole de référence SYMRᵢ.

Plus précisément, cette fonction de transfert Hᵢ est égale au produit du symbole de référence reçu SYMRᵢ par le conjugué complexe du symbole correspondant transmis par l'émetteur sur le canal de transmission. Dans le cas présent, conforme à la norme PLC-G3, cette fonction de transfert Hᵢ est en fait un vecteur complexe ayant 36 composantes complexes correspondant respectivement aux 36 tons du symbole.

A l'issue de l'étape 80, on obtient donc une séquence initiale de M (=15) fonctions de transfert H₁-H₁₅ correspondant respectivement aux M (=15) symboles de référence SYMR₁-SYMR₁₅.

Dans le mode de mise en oeuvre qui vient d'être décrit, on a supposé que la fréquence d'échantillonnage côté émission était identique à la fréquence d'échantillonnage du signal numérique de canal SNC.

Cela étant, comme indiqué ci-avant, la fréquence d'échantillonnage du signal numérique SNC peut être différente du signal numérique initial élaboré dans l'émetteur.

Dans ce cas, il résulte un décalage de fréquence d'échantillonnage connu par l'homme du métier sous l'expression anglosaxonne « sampling frequency offset » qu'il faut prendre en compte dans l'estimation des fonctions de transfert Hᵢ.

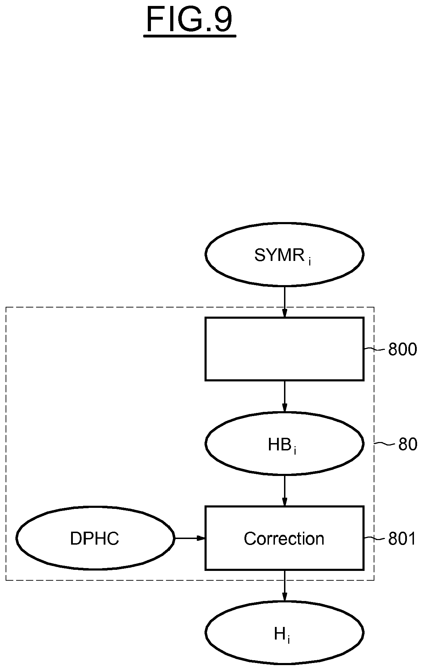

Ceci est illustré schématiquement sur la figure 9.

Plus précisément, on détermine, dans l'étape 800, d'une façon analogue à ce qui a été décrit dans l'étape 80 de la figure 8, des fonctions de transfert de base HBᵢ respectivement associées aux symboles de référence SYMRᵢ.

Puis, on estime le décalage de fréquence (« sampling frequency offset ») en utilisant par exemple deux fonctions de transfert de base relativement temporellement éloignées, par exemple les fonctions de transfert HB₁ et HB₁₃.

Le déphasage qui en résulte est alors obtenu en effectuant le produit de la fonction de transfert HB₁ par le conjugué complexe de la fonction de transfert HB₁₃, le tout divisé par le nombre de symboles.

On obtient alors une correction de déphasage DPHC qui est appliquée dans une étape 801 pour corriger les M fonctions de transfert HBᵢ et obtenir les M fonctions de transfert Hᵢ.

L'estimation d'une fonction de transfert à partir de chacun des symboles S1 et S2 peut s'effectuer sans difficulté puisque les symboles transmis correspondant aux symboles S1 et S2 reçus sont connus.

Par contre, ce n'est pas le cas pour les symboles de référence de l'en-tête c'est-à-dire les symboles FCHᵢ.

Néanmoins, comme indiqué ci-avant, ces symboles FCHᵢ ont été codés à l'émission de façon différentielle et particulièrement robuste. Leur décodage ne nécessite donc pas la connaissance de la fonction de transfert du canal.

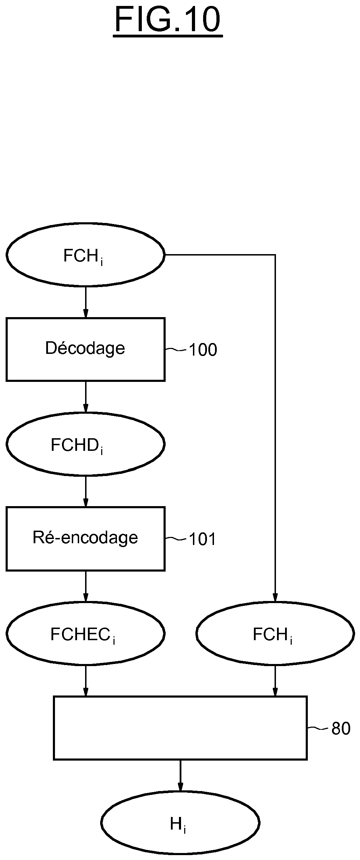

La figure 10 illustre un exemple d'estimation d'une fonction de transfert Hᵢ du canal à partir du symbole FCHᵢ de l'en-tête reçu.

On procède tout d'abord au décodage (étape 100) du symbole reçu FCHᵢ.

A cet égard, les moyens de décodage comportent classiquement des moyens configurés pour retirer de chaque symbole le préfixe cyclique, suivis de moyens configurés pour effectuer la transformée de Fourier rapide directe FFT.

Les moyens de décodage comportent également des moyens de démappage (demapping means) fournissant pour chaque porteuse une valeur du coefficient de modulation correspondant (bin). Ces moyens de démappage sont suivis d'un module configuré pour déterminer pour chaque coefficient de modulation une indication de confiance (décision douce : « soft decision ») de ladite valeur. Ce module est classique et connu en soi et utilise par exemple un algorithme du type LogMAP.

Les moyens de décodage comportent également des moyens de désentrelacement suivis d'un décodeur, par exemple un décodeur de type Viterbi, suivi de moyens aptes à effectuer un contrôle de parité. La sortie de ces moyens est connectée à la borne de sortie BS du sous-étage ET20 qui est connectée aux moyens formant la couche MAC du récepteur.

Puisque les différents symboles FCHᵢ sont référencés par rapport aux symboles précédents dans la trame, il est nécessaire de décoder tous les symboles FCHᵢ de l'en-tête avec les moyens de décodage mentionnés ci-avant. Puis, après vérification que le contrôle de parité est correct, on peut obtenir les différents symboles décodés FCHDᵢ.

On effectue alors dans l'étape 101 un réencodage de chacun de ces symboles FCHDᵢ en utilisant un encodeur convolutionnel, un entrelaceur et un moyen de mappage analogues aux moyens correspondants ENC, INTL, MP illustrés sur la figure 1 pour la partie émetteur.

On notera à cet égard que l'on reste dans le domaine fréquentiel.

On obtient alors des symboles réencodés FCHECᵢ correspondant aux symboles transmis.

On peut alors, dans l'étape 80 analogue à l'étape 80 de la figure 8, obtenir les fonctions de transfert Hᵢ associées aux différents symboles FCHᵢ à partir de ces symboles reçus FCHᵢ et des symboles réencodés FCHECᵢ.

Alors qu'il serait possible d'utiliser directement quatorze des fonctions de transfert Hᵢ pour le décodage ultérieur des symboles P0, P1, ... du champ utile PLD de la trame, il est préférable, de façon à améliorer le rapport signal sur bruit, de réduire ce nombre de fonctions de transfert.

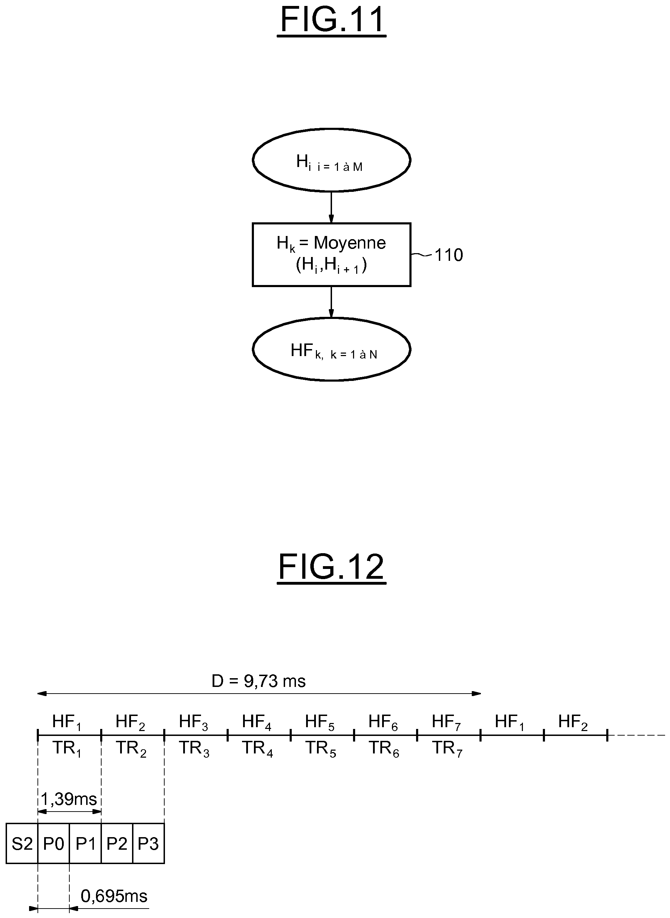

Ainsi, comme illustré sur la figure 11, à partir des M fonctions de transferts Hᵢ (M=15) on va obtenir, en effectuant une moyenne deux à deux de certaines des fonctions de transfert Hᵢ (étape 110), les N (N=7 par exemple) fonctions de transfert HFₖ, k variant de 1 à N, respectivement associées aux N (=7) tranches temporelles TR₁-TR₇ (figure 12).

La durée de chaque tranche temporelle est égale à la durée de deux symboles P du champ utile PLD, soit 1,39 ms.

De ce fait, la durée totale D de toutes les tranches temporelles TR₁-TR₇ est égale à 9,73 ms, ce qui est légèrement inférieur à la période de cyclo-stationnarité PC (10 ms).

La période PC est ainsi comprise ici entre N (=7) fois et N+1 (=8) fois 1,39ms.

Dans l'étape 110, pour obtenir les sept fonctions de transfert HFₖ, on choisit quatorze fonctions de transfert Hᵢ parmi les quinze fonctions de transfert obtenues lors à partir des quinze symboles de référence.

On choisira par exemple les fonctions de transfert H₂-H₁₅.

Et, dans ce cas, la fonction de transfert HF₁ est égale à la moyenne des fonctions de transfert H₂ et H₃.

La fonction de transfert HF₂ est égale à la moyenne des fonctions de transfert H₃ et H₄, et ainsi de suite jusqu'à obtenir la fonction de transfert HF₇ qui est égale à la moyenne des fonctions de transfert H₁₄ et H₁₅.

Comme illustré sur la figure 12, on va utiliser pour décoder les symboles P0, P1, P2... qui suivent le dernier symbole de référence S2, la fonction de transfert HFₖ qui est associée à la tranche temporelle TRₖ contenant le symbole à décoder. La fonction de transfert utilisée est prise en compte, comme il est connu par l'homme du métier, au niveau du moyen de démappage incorporé dans les moyens de décodage.

Et, on va utiliser successivement et cycliquement les fonctions de transfert de la séquence des N fonctions de transfert HF₁-HF₇.

En d'autres termes, une fois que l'on a utilisé le cycle complet des sept fonctions de transfert HF₁-HF₇, on recommence le cycle par l'utilisation de la fonction de transfert HF₁ jusqu'à HF₇ et ainsi de suite.

Cela étant, lorsque la durée D des N tranches temporelles est différente de la période de cyclo-stationnarité, il va y avoir progressivement un décalage temporel entre le cycle des fonctions de transfert HF₁-HF₇ et la période de cyclo-stationnarité du canal.

En d'autres termes, à un moment donné, il va y avoir un écart temporel égal à une tranche temporelle entre le cycle des fonctions de transfert et le cycle de variation du canal.

Il convient alors d'effectuer un décalage de fonction de transfert dans cette utilisation successive et cyclique des fonctions de transfert.

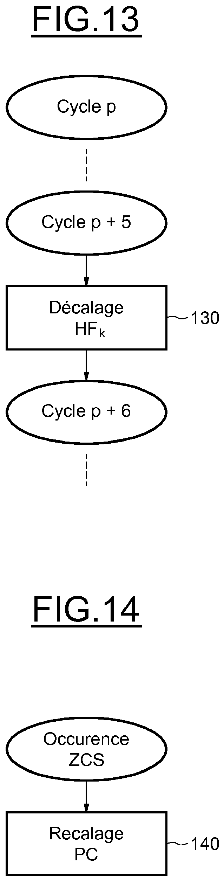

Ceci est illustré schématiquement sur la figure 13.

Dans le cas présent, avec une durée D égale à 9,73 ms et une période de cyclo-stationnarité de 10 ms, on procède à ce décalage au bout de cinq cycles de fonction de transfert et pour l'exécution du sixième cycle, on va réutiliser une deuxième fois la fonction de transfert HF₇ au lieu d'utiliser directement la fonction de transfert HF₁.

Bien entendu, après avoir utilisé une deuxième fois la fonction de transfert HF₇, on reprend le cycle des fonctions de transfert HF₁-HF₇.

Il peut également arriver que la valeur de la période de cyclo-stationnarité qui est directement liée à la période du signal alternatif circulant sur la ligne électrique, se décale temporellement en raison d'un décalage temporel de la période du signal électrique alternatif sur la ligne. Ceci peut être corrigé au moyen d'un signal de référence ZCS (figure 14) qui est délivré à chaque franchissement de « 0 » du courant ou de la tension alternatif.

Et, dans ce cas, les moyens d'estimation sont configurés pour recaler (étape 140) la valeur de la période de cyclo-stationnarité du canal à partir des occurrences du signal de référence ZCS.

## Revendications

1. Procédé de traitement d'un signal analogique de canal issu d'un canal de transmission, le signal analogique de canal véhiculant des trames (TRM) de symboles, et le canal de transmission étant considéré comme étant linéaire et cyclo-stationnaire pour toute la durée d'au moins une trame, le procédé comprenant une conversion analogique/numérique du signal analogique de canal de façon à obtenir un signal numérique de canal, et une pluralité d'estimations de canal (80) effectuées pour ladite au moins une trame à partir du signal numérique de canal de façon à élaborer une séquence de N fonctions de transfert (HFₖ) du canal de transmission respectivement associées à N tranches temporelles successives (TRₖ), la durée totale (D) des N tranches temporelles étant égale à la quasi-totalité de la période de cyclo-stationnarité (PC) du canal ou à la totalité de ladite période (PC), et un décodage de certains au moins des symboles de ladite au moins une trame en utilisant pour chacun de ces symboles la fonction de transfert associée à la tranche temporelle contenant ledit symbole, l'élaboration de la séquence des N fonctions de transfert comprenant une élaboration d'une séquence initiale de M fonctions de transfert (Hi) respectivement associées à M symboles de référence successifs de ladite au moins une trame, les M symboles de référence couvrant temporellement une durée égale ou légèrement supérieure à la totalité de ladite période de cyclo-stationnarité, les N fonctions de transfert (HFₖ) étant issues de ces M fonctions de transfert (Hi),
**caractérisé en ce que** le signal analogique de canal est issu d'une conversion numérique/analogique d'un signal numérique initial, et lorsque la fréquence d'échantillonnage du signal numérique de canal est différente de la fréquence d'échantillonnage du signal numérique initial, ladite pluralité d'estimations de canal comprennent des estimations (800) de M fonctions de transfert de base (HBi) respectivement effectuées à partir des M symboles de référence de ladite trame reçue, et un traitement (801) de correction de ces M fonctions de transfert de base avec un déphasage (DPHC) correspondant à ce décalage de fréquence d'échantillonnage de façon à obtenir lesdites M fonctions de transfert (Hᵢ).

2. Procédé selon la revendication 1, dans lequel les N fonctions de transfert (HFₖ) sont les moyennes de groupes successifs de certaines au moins des fonctions de transfert successives (H₂-H₁₅) de ladite séquence initiale.

3. Procédé selon l'une des revendications 1 ou 2, dans lequel les symboles de référence de la trame reçue correspondent à des symboles connus (S1, S2) de la trame transmise et/ou sont des symboles (FCHᵢ) décodables sans connaître la fonction de transfert du canal de transmission.

4. Procédé selon la revendication 3, dans lequel chaque estimation de canal effectuée à partir d'un symbole décodable reçu (FCHᵢ) comprend un décodage (100) du symbole reçu, un ré-encodage (101) de ce symbole décodé de façon à obtenir un symbole ré-encodé (FCHECᵢ) et une détermination de la fonction de transfert du canal à partir dudit symbole ré-encodé et dudit symbole décodable reçu.

5. Procédé selon l'une des revendications précédentes, dans lequel le signal analogique de canal est modulé selon une modulation OFDM.

6. Procédé selon l'une des revendications précédentes, dans lequel le canal de transmission est une ligne électrique, le signal analogique de canal est véhiculé par courant porteur de ligne et la période de cyclo-stationnarité (PC) du canal est la moitié de la période du courant alternatif destiné à circuler sur ladite ligne électrique.

7. Procédé selon la revendication 5, dans lequel le signal analogique de canal est conforme à la norme PLC-G3.

8. Procédé selon les revendications 3 et 6, dans lequel chaque trame reçue comporte un préambule (PRM) suivi d'un en-tête (HD) suivi d'un champ utile (PLD) et lesdits symboles de référence comportent les symboles (FCHi) de l'entête et deux symboles (S1, S2) du champ utile correspondant à deux symboles connus de la trame transmise.

9. Procédé selon les revendications 2 et 8, dans lequel M est égal 15, N est égal à 7, les N fonctions de transfert (HFₖ) étant les moyennes deux à deux de quatorze fonctions de transfert successives (H₂-H₁₅) de ladite séquence initiale.

10. Procédé selon l'une des revendications précédentes, dans lequel le décodage des symboles suivant le dernier symbole de référence utilise successivement et cycliquement les fonctions de transfert de la séquence des N fonctions de transfert (HFₖ).

11. Procédé selon la revendication 10, dans lequel lorsque la durée (D) des N tranches temporelles est différente de la période de cyclo-stationnarité (PC), le décodage des symboles suivant le dernier symbole de référence comprend également périodiquement un décalage (130) de fonction de transfert dans l'utilisation successive et cyclique des fonctions de transfert.

12. Procédé selon la revendication 10 ou 11, dans lequel le signal est véhiculé par courant porteur de ligne, la période de cyclo-stationnarité du canal est la moitié de la période du courant alternatif destiné à circuler sur ladite ligne électrique, dans lequel un signal de référence (ZCS) est délivré à chaque franchissement de zéro dudit courant alternatif, et la valeur de la période de cyclo-stationnarité du canal est recalée à partir des occurrences dudit signal de référence.

13. Récepteur, comprenant un étage d'entrée (ET1) destiné à être connecté sur un canal de transmission et configuré pour délivrer un signal analogique de canal issu du canal de transmission, un étage (CAN) de conversion analogique/numérique du signal analogique de canal pour délivrer un signal numérique de canal et des moyens (ET2) de traitement dudit signal numérique de canal, le signal analogique de canal véhiculant des trames (TRM) de symboles et le canal de transmission étant considéré comme étant linéaire et cyclo-stationnaire pour toute la durée d'au moins une trame, les moyens de traitement comprenant des moyens d'estimation (MEST) configurés pour effectuer une pluralité d'estimations de canal (80) pour ladite au moins une trame à partir du signal numérique de canal de façon à élaborer une séquence de N fonctions de transfert (HFₖ) du canal de transmission respectivement associées à N tranches temporelles successives, la durée totale (D) des N tranches temporelles étant égale à la quasi-totalité de la période de cyclo-stationnarité (PC) du canal ou à la totalité de ladite période (PC), et des moyens de décodage (MDCD) configurés pour décoder certains au moins des symboles de ladite au moins une trame en utilisant pour chacun de ces symboles la fonction de transfert associée à la tranche temporelle contenant ledit symbole,
les moyens d'estimation comprenant des moyens d'élaboration (MLB) configurés pour élaborer une séquence initiale de M fonctions de transfert (Hᵢ) respectivement associées à M symboles de référence successifs de ladite au moins une trame, les M symboles de référence couvrant temporellement une durée égale ou légèrement supérieure à la totalité de ladite période, et pour déterminer les N fonctions de transfert à partir de ces M fonctions de transfert,
**caractérisé en ce que** le signal analogique de canal est issu d'une conversion numérique/analogique d'un signal numérique initial, et lorsque la fréquence d'échantillonnage du signal numérique est différente de la fréquence d'échantillonnage du signal numérique initial, les moyens d'élaboration (MLB) sont en outre configurés pour effectuer des estimations de M fonctions de transfert de base respectivement à partir des M symboles de référence de ladite trame reçue, et un traitement de correction de ces M fonctions de transfert de base avec un déphasage correspondant à ce décalage de fréquence d'échantillonnage de façon à délivrer lesdites M fonctions de transfert.

14. Récepteur selon la revendication 13, dans lequel les moyens d'élaboration (MLB) sont configurés pour effectuer les moyennes de groupes successifs de certaines au moins des fonctions de transfert successives de ladite séquence initiale de façon à obtenir les N fonctions de transfert.

15. Récepteur selon l'une des revendications 13 ou 14, dans lequel les symboles de référence (SYMRᵢ) de la trame reçue correspondent à des symboles connus (S1, S2) de la trame transmise et/ou sont des symboles (FCHᵢ) décodables sans connaître la fonction de transfert du canal de transmission.

16. Récepteur selon la revendication 15, dans lequel les moyens d'estimation (MEST) sont configurés pour effectuer un décodage d'un symbole décodable reçu, un ré-encodage de ce symbole décodé de façon à obtenir un symbole ré-encodé et une détermination de la fonction de transfert associée à ce symbole décodable reçu, à partir dudit symbole ré-encodé et dudit symbole décodable reçu.

17. Récepteur selon l'une des revendications 13 à 16, dans lequel le signal est modulé selon une modulation OFDM.

18. Récepteur selon l'une des revendications 13 à 17, dans lequel le canal de transmission est une ligne électrique, le signal est destiné à être véhiculé par courant porteur de ligne et la période de cyclo-stationnarité (PC) du canal est la moitié de la période du courant alternatif destiné à circuler sur ladite ligne électrique.

19. Récepteur selon la revendication 18, dans lequel le signal analogique de canal est conforme à la norme PLC-G3.

20. Récepteur selon les revendications 15 et 19, dans lequel chaque trame reçue (TRM) comporte un préambule (PRM) suivi d'un en-tête (HD) suivi d'un champ utile (PLD) et lesdits symboles de référence comportent les symboles de l'entête (FCHᵢ) et deux symboles du champ utile correspondant à deux symboles connus (S1, S2) de la trame transmise.

21. Récepteur selon les revendications 14 et 20, dans lequel M est égal 15, N est égal à 7, et les moyens d'élaboration (MLB) sont configurés pour effectuer les moyennes deux à deux de quatorze fonctions de transfert successives de ladite séquence initiale de façon à obtenir les N fonctions de transfert.

22. Récepteur selon l'une des revendications 13 à 21, dans lequel les moyens de décodage (MDCD) sont configurés pour utiliser successivement et cycliquement les fonctions de transfert de la séquence des N fonctions de transfert de façon à décoder les symboles suivant le dernier symbole de référence.

23. Récepteur selon la revendication 22, dans lequel lorsque la durée des N tranches temporelles est différente de la période de cyclo-stationnarité, les moyens de décodage (MDCD) sont configurés pour effectuer périodiquement un décalage de fonction de transfert dans l'utilisation successive et cyclique des fonctions de transfert de façon à décoder les symboles suivant le dernier symbole de référence.

24. Récepteur selon la revendication 22 ou 23, dans lequel le signal est destiné à être véhiculé par courant porteur de ligne, la période de cyclo-stationnarité du canal est la moitié de la période du courant alternatif destiné à circuler sur ladite ligne électrique, l'étage d'entrée (ET1) est configuré pour délivrer en outre un signal de référence (ZCS) à chaque franchissement de zéro dudit courant alternatif, et les moyens d'estimation (MEST) sont configurés pour recaler la valeur de la période de cyclo-stationnarité du canal à partir des occurrences dudit signal de référence.

## Patentansprüche

1. Verfahren zur Bearbeitung eines analogen Kanalsignals, das von einem Übertragungskanal kommt, wobei das analoge Kanalsignal Symbolrahmen (TRM) befördert, und wobei der Übertragungskanal als linear und zyklo-stationär für die gesamte Dauer mindestens eines Rahmens betrachtet wird, wobei das Verfahren eine Analog-/Digital-Umwandlung des analogen Kanalsignals, um ein digitales Kanalsignal zu erhalten, und eine Vielzahl von Kanalschätzungen (80) umfasst, die für den mindestens einen Rahmen auf Basis des digitalen Kanalsignals durchgeführt werden, um eine Folge von N Transferfunktionen (HFₖ) des Übertragungskanals auszuarbeiten, die jeweils N aufeinanderfolgenden Zeitabschnitten (TRₖ) zugeordnet sind, wobei die Gesamtdauer (D) der N Zeitabschnitte gleichsam gleich der Gesamtheit der zyklo-stationären Periode (PC) des Kanals oder der Gesamtheit der Periode (PC) ist, und eine Decodierung mindestens gewisser der Symbole des mindestens einen Rahmens unter Verwendung für jedes dieser Symbole die Transferfunktion, die dem das Symbol enthaltenden Zeitabschnitt zugeordnet ist, wobei die Ausarbeitung der Folge der N Transferfunktionen eine Ausarbeitung einer Anfangsfolge von M Transferfunktionen (Hi) umfasst, die jeweils M aufeinanderfolgenden Referenzsymbolen des mindestens einen Rahmens zugeordnet sind, wobei die M Referenzsymbole zeitlich eine Dauer gleich oder etwas länger als die Gesamtheit der zyklo-stationären Periode abdecken, wobei die N Transferfunktionen (HFₖ) von diesen M Transferfunktionen (Hᵢ) ausgehen,
**dadurch gekennzeichnet, dass** das analoge Kanalsignal aus einer Digital-/Analog-Umwandlung eines digitalen Anfangssignals stammt, und wenn die Samplefrequenz des digitalen Kanalsignals zu der Samplefrequenz des digitalen Anfangssignals unterschiedlich ist, die Vielzahl von Kanalschätzungen Schätzungen (800) von M Basistransferfunktionen (HBᵢ), die jeweils auf Basis der M Referenzsymbole des empfangenen Rahmens ausgeführt werden, und eine Korrekturbearbeitung (801) dieser M Basistransferfunktionen mit einer Phasenverschiebung (DPHC) entsprechend diesem Samplefrequenzversatz umfasst, um die M Transferfunktionen (Hᵢ) zu erhalten.

2. Verfahren nach Anspruch 1, bei dem die N Transferfunktionen (HFₖ) die Durchschnitte von aufeinanderfolgenden Gruppen von mindestens gewissen der aufeinanderfolgenden Transferfunktionen (H₂-H₁₅) der Anfangsfolge sind.

3. Verfahren nach einem der Ansprüche 1 oder 2, bei dem die Referenzsymbole des empfangenen Rahmens bekannten Symbolen (S1, S2) des übertragenen Rahmens entsprechen und/oder decodierbare Symbole (FCHᵢ), ohne die Transferfunktion des Übertragungskanals zu kennen, sind.

4. Verfahren nach Anspruch 3, bei dem jede Kanalschätzung, die auf Basis eines empfangenen decodierbaren Symbols (FCHᵢ) durchgeführt wird, eine Decodierung (100) des empfangenen Symbols, eine Neucodierung (101) dieses decodierten Symbols, um ein neucodiertes Symbol (FCHECᵢ) zu erhalten, und eine Bestimmung der Transferfunktion des Kanals auf Basis des neucodierten Symbols und des empfangenen decodierbaren Symbols umfasst.

5. Verfahren nach einem der vorhergehenden Ansprüche, bei dem das analoge Kanalsignal nach einer Modulation OFDM moduliert wird.

6. Verfahren nach einem der vorhergehenden Ansprüche, bei dem der Übertragungskanal eine elektrische Leitung ist, das analoge Kanalsignal durch Leitungsträgerstrom befördert wird, und die zyklo-stationäre Periode (PC) des Kanals die Hälfte der Periode des Wechselstroms ist, der dazu bestimmt ist, in der elektrischen Leitung zu zirkulieren.

7. Verfahren nach Anspruch 5, bei dem das analoge Kanalsignal mit der Norm PLC-G3 konform ist.

8. Verfahren nach den Ansprüchen 3 und 6, bei dem jeder empfangene Rahmen eine Präambel (PRM), gefolgt von einer Überschrift (HD), gefolgt von einem nutzbaren Feld (PLD), umfasst, und die Referenzsymbole die Symbole (FCHᵢ) der Überschrift und zwei Symbole (S1, S2) des nutzbaren Feldes entsprechend zwei bekannten Symbolen des übertragenen Rahmens umfasst.

9. Verfahren nach den Ansprüchen 2 und 8, bei dem M gleich 15, N gleich 7 ist, wobei die N Transferfunktionen (HFₖ) die paarweisen Durchschnitte von vierzehn aufeinanderfolgenden Transferfunktionen (H₂-H₁₅) der Anfangsfolge sind.

10. Verfahren nach einem der vorhergehenden Ansprüche, bei dem die Decodierung der Symbole nach dem letzten Referenzsymbol nacheinander und zyklisch die Transferfunktionen der Folge der N Transferfunktionen (HFₖ) verwendet.

11. Verfahren nach Anspruch 10, bei dem, wenn die Dauer (D) der N Zeitabschnitte zu der zyklo-stationären Periode (PC) unterschiedlich ist, die Decodierung der Symbole nach dem letzten Referenzsymbol auch periodisch einen Versatz (130) einer Transferfunktion bei der aufeinanderfolgenden und zyklischen Verwendung der Transferfunktionen umfasst.

12. Verfahren nach Anspruch 10 oder 11, bei dem das Signal durch Leitungsträgerstrom befördert wird, die zyklo-stationäre Periode des Kanals die Hälfte der Periode des Wechselstroms ist, der dazu bestimmt ist, in der elektrischen Leitung zu zirkulieren, bei dem ein Referenzsignal (ZCS) bei jeder Nullkreuzung des Wechselstroms geliefert wird, und der Wert der zyklo-stationären Periode des Kanals auf Basis der Auftritte des Referenzsignals zurückgesetzt wird.

13. Empfänger, umfassend eine Eingangsstufe (ET1), die dazu bestimmt ist, an einen Übertragungskanal angeschlossen zu werden, und eingerichtet ist, um ein analoges Kanalsignal, das von dem Übertragungskanal kommt, zu liefern, eine Stufe (CAN) zur Analog-/Digital-Umwandlung des analogen Kanalsignals, um ein digitales Kanalsignal zu liefern, und Bearbeitungsmittel (ET2) des digitalen Kanalsignals, wobei das analoge Kanalsignal Rahmen (TRM) von Symbolen befördert und der Übertragungskanal als linear und zyklo-stationär für die gesamte Dauer mindestens eines Rahmens betrachtet wird, die Bearbeitungsmittel Schätzungsmittel (MEST) umfassen, die eingerichtet sind, um eine Vielzahl von Kanalschätzungen (80) für den mindestens einen Rahmen auf Basis des digitalen Kanalsignals durchzuführen, um eine Folge von N Transferfunktionen (HFₖ) des Übertragungskanals auszuarbeiten, die jeweils N aufeinanderfolgenden Zeitabschnitten zugeordnet sind, wobei die Gesamtdauer (D) der N Zeitabschnitte gleichsam gleich der Gesamtheit der zyklo-stationären Periode (PC) des Kanals oder der Gesamtheit der Periode (PC) ist, und Decodierungsmittel (MDCD), die eingerichtet sind, um mindestens gewisse der Symbole des mindestens einen Rahmens unter Verwendung für jedes dieser Symbole der Transferfunktion, die dem das Symbol enthaltenden Zeitabschnitt zugeordnet ist, zu decodieren,
wobei die Schätzungsmittel Ausarbeitungsmittel (MLB) umfassen, die eingerichtet sind, um eine Anfangsfolge von M Transferfunktionen (Hi) auszuarbeiten, die jeweils M aufeinanderfolgenden Referenzsymbolen des mindestens einen Rahmens zugeordnet sind, wobei die M Referenzsymbole zeitliche eine Dauer gleich oder etwas länger als die Gesamtheit der Periode abdecken, und um die N Transferfunktionen auf Basis dieser M Transferfunktionen zu bestimmen,
**dadurch gekennzeichnet, dass** das analoge Kanalsignal aus einer Digital-/Analog-Umwandlung eines digitalen Anfangssignals stammt, und wenn die Samplefrequenz des digitalen Kanalsignals zu der Samplefrequenz des digitalen Anfangssignals unterschiedlich ist, die Ausarbeitungsmittel (MLB) ferner eingerichtet sind, um Schätzungen von M Basistransferfunktionen jeweils auf Basis der M Referenzsymbole des empfangenen Rahmens und eine Korrekturbearbeitung dieser M Basistransferfunktionen mit einer Phasenverschiebung entsprechend diesem Samplefrequenzversatz durchzuführen, um die M Transferfunktionen zu liefern.

14. Empfänger nach Anspruch 13, bei dem die Ausarbeitungsmittel (MLB) eingerichtet sind, um die Durchschnitte von aufeinanderfolgenden Gruppen mindestens gewisser der aufeinanderfolgenden Transferfunktionen der Anfangsfolge zu erstellen, um die N Transferfunktionen zu erhalten.

15. Empfänger nach einem der Ansprüche 13 oder 14, bei dem die Referenzsymbole (SYMRᵢ) des empfangenen Rahmens bekannten Symbolen (S1, S2) des übertragenen Rahmens entsprechen und/oder decodierbare Symbole (FCHᵢ), ohne die Transferfunktion des Übertragungskanals zu kennen, sind.

16. Empfänger nach Anspruch 15, bei dem die Schätzungsmittel (MEST) eingerichtet sind, um eine Decodierung eines empfangenen decodierbaren Symbols, eine Neucodierung dieses decodierten Symbols, um ein neucodiertes Symbol zu erhalten, und eine Bestimmung der diesem empfangenen decodierbaren Symbol zugeordneten Transferfunktion auf Basis des neucodierten Symbols und des empfangenen decodierbaren Symbols durchzuführen.

17. Empfänger nach einem der Ansprüche 13 bis 16, bei dem das Signal nach einer Modulation OFDM moduliert wird.

18. Empfänger nach einem der Ansprüche 13 bis 17, bei dem der Übertragungskanal eine elektrische Leitung ist, das Signal dazu bestimmt ist, durch Leitungsträgerstrom befördert zu werden, und die zyklo-stationäre Periode (PC) des Kanals die Hälfte der Periode des Wechselstroms ist, der dazu bestimmt ist, in der elektrischen Leitung zu zirkulieren.

19. Empfänger nach Anspruch 18, bei dem das analoge Kanalsignal mit der Norm PLC-G3 konform ist.

20. Empfänger nach den Ansprüchen 15 und 19, bei dem jeder empfangene Rahmen (TRM) eine Präambel (PRM), gefolgt von einer Überschrift (HD), gefolgt von einem nutzbaren Feld (PLD), umfasst, und die Referenzsymbole die Symbole (FCHᵢ) der Überschrift und zwei Symbole des nutzbaren Feldes entsprechend zwei bekannten Symbolen (S1, S2) des übertragenen Rahmens umfasst.

21. Empfänger nach den Ansprüchen 14 und 20, bei dem M gleich 15, N gleich 7 ist, und die Ausarbeitungsmittel (MLB) eingerichtet sind, um die paarweisen Durchschnitte von vierzehn aufeinanderfolgenden Transferfunktionen der Anfangsfolge zu erstellen, um die N Transferfunktionen zu erhalten.

22. Empfänger nach einem der Ansprüche 13 bis 21, bei dem die Decodierungsmittel (MDCD) eingerichtet sind, um nacheinander und zyklisch die Transferfunktionen der Folge der N Transferfunktionen zu verwenden, um die Symbole nach dem letzten Referenzsymbol zu decodieren.

23. Empfänger nach Anspruch 22, bei dem, wenn die Dauer der N Zeitabschnitte zu der zyklo-stationären Periode unterschiedlich ist, die Decodierungsmittel (MDCD) eingerichtet sind, um periodisch einen Versatz einer Transferfunktion bei der aufeinanderfolgenden und zyklischen Verwendung der Transferfunktionen durchzuführen, um die Symbole nach dem letzten Referenzsymbol zu decodieren.

24. Empfänger nach Anspruch 22 oder 23, bei dem das Signal dazu bestimmt ist, durch Leitungsträgerstrom befördert zu werden, die zyklo-stationäre Periode des Kanals die Hälfte der Periode des Wechselstroms ist, der dazu bestimmt ist, in der elektrischen Leitung zu zirkulieren, die Eingangsstufe (ET1) eingerichtet ist, um ferner ein Referenzsignal (ZCS) bei jeder Nullkreuzung des Wechselstroms zu liefern, und die Schätzungsmittel (MEST) eingerichtet sind, um den Wert der zyklo-stationären Periode des Kanals auf Basis der Auftritte des Referenzsignals zurückzusetzen.

## Claims

1. Method for processing an analogue channel signal deriving from a transmission channel, the analogue channel signal conveying symbol frames (TRM), and the transmission channel being considered to be linear and cyclo-stationary for the entire duration of at least one frame, the method comprising an analogue-digital conversion of the analogue channel signal so as to obtain a digital channel signal, and a plurality of channel estimations (80) performed for the said at least one frame on the basis of the digital channel signal so as to formulate a sequence of N transfer functions (HFₖ) of the transmission channel which are respectively associated with N successive time slices (TRₖ), the total duration (D) of the N time slices being equal to almost the whole of the cyclo-stationarity period (PC) of the channel or to the whole of the said period (PC), and a decoding of at least some of the symbols of the said at least one frame by using for each of these symbols the transfer function associated with the time slice containing the said symbol,
the formulation of the sequence of N transfer functions comprising a formulation of an initial sequence of M transfer functions (Hᵢ) respectively associated with M successive reference symbols of the said at least one frame, the M reference symbols temporally covering a duration equal to or slightly greater than the whole of the said cyclo-stationarity period, the N transfer functions (HFₖ) being derived from these M transfer functions (Hi),
**characterized in that** the analogue channel signal derives from a digital-analogue conversion of an initial digital signal, and when the sampling frequency of the digital channel signal is different from the sampling frequency of the initial digital signal, the said plurality of channel estimations comprise estimations (800) of M base transfer functions (HBᵢ) respectively performed on the basis of the M reference symbols of the said received frame, and a processing (801) for correcting these M base transfer functions with a phase shift (DPHC) corresponding to this shift of sampling frequency so as to obtain the said M transfer functions (Hᵢ).

2. Method according to Claim 1, in which the N transfer functions (HFₖ) are the averages of successive groups of at least some of the successive transfer functions (H₂-H₁₅) of the said initial sequence.

3. Method according to either of Claims 1 and 2, in which the reference symbols of the received frame correspond to known symbols (S1, S2) of the transmitted frame and/or are decodable symbols (FCHᵢ) that can be decoded without knowing the transfer function of the transmission channel.

4. Method according to Claim 3, in which each channel estimation performed on the basis of a decodable symbol received (FCHᵢ) comprises a decoding (100) of the symbol received, a re-encoding (101) of this decoded symbol so as to obtain a re-encoded symbol (FCHECᵢ) and a determination of the transfer function of the channel on the basis of the said re-encoded symbol and of the said decodable symbol received.

5. Method according to one of the preceding claims, in which the analogue channel signal is modulated according to an OFDM modulation.

6. Method according to one of the preceding claims, in which the transmission channel is an electrical line, the analogue channel signal is conveyed by power line communications and the cyclo-stationarity period (PC) of the channel is half the period of the alternating current intended to flow on the said electrical line.

7. Method according to Claim 5, in which the analogue channel signal complies with the PLC-G3 standard.

8. Method according to Claims 3 and 6, in which each received frame comprises a preamble (PRM) followed by a header (HD) followed by a useful field (PLD) and the said reference symbols comprise the symbols (FCHᵢ) of the header and two symbols (S1, S2) of the useful field corresponding to two known symbols of the transmitted frame.

9. Method according to Claims 2 and 8, in which M is equal to 15, N is equal to 7, the N transfer functions (HFₖ) being the pairwise averages of fourteen successive transfer functions (H₂-H₁₅) of the said initial sequence.

10. Method according to one of the preceding claims, in which the decoding of the symbols following the last reference symbol uses successively and cyclically the transfer functions of the sequence of N transfer functions (HFₖ).

11. Method according to Claim 10, in which when the duration (D) of the N time slices is different from the cyclo-stationarity period (PC), the decoding of the symbols following the last reference symbol comprises also periodically a shift (130) of transfer function in the successive and cyclic use of the transfer functions.

12. Method according to Claim 10 or 11, in which the signal is conveyed by power line communications, the cyclo-stationarity period of the channel is half the period of the alternating current intended to flow on the said electrical line, in which a reference signal (ZCS) is delivered at each zero crossing of the said alternating current, and the value of the cyclo-stationarity period of the channel is adjusted on the basis of the occurrences of the said reference signal.

13. Receiver, comprising an input stage (ET1) intended to be connected to a transmission channel and configured to deliver an analogue channel signal deriving from the transmission channel, a stage (ADC) for analogue-digital conversion of the analogue channel signal so as to deliver a digital channel signal and means (ET2) for processing the said digital channel signal, the analogue channel signal conveying symbol frames (TRM) and the transmission channel being considered to be linear and cyclo-stationary for the entire duration of at least one frame, the processing means comprising estimation means (MEST) configured to perform a plurality of channel estimations (80) for the said at least one frame on the basis of the digital channel signal so as to formulate a sequence of N transfer functions (HFₖ) of the transmission channel which are respectively associated with N successive time slices, the total duration (D) of the N time slices being equal to almost the whole of the cyclo-stationarity period (PC) of the channel or to the whole of the said period (PC), and decoding means (MDCD) configured to decode at least some of the symbols of the said at least one frame by using for each of these symbols the transfer function associated with the time slice containing the said symbol,
the estimation means comprising formulation means (MLB) configured to formulate an initial sequence of M transfer functions (Hᵢ) respectively associated with M successive reference symbols of the said at least one frame, the M reference symbols temporally covering a duration equal to or slightly greater than the whole of the said period, and to determine the N transfer functions on the basis of these M transfer functions,
**characterized in that** the analogue channel signal derives from a digital-analogue conversion of an initial digital signal, and when the sampling frequency of the digital signal is different from the sampling frequency of the initial digital signal, the formulation means (MLB) are furthermore configured to perform estimations of M base transfer functions respectively on the basis of the M reference symbols of the said received frame, and a processing for correcting these M base transfer functions with a phase shift corresponding to this shift of sampling frequency so as to deliver the said M transfer functions.

14. Receiver according to Claim 13, in which the formulation means (MLB) are configured to perform the averages of successive groups of at least some of the successive transfer functions of the said initial sequence so as to obtain the N transfer functions.

15. Receiver according to either of Claims 13 and 14, in which the reference symbols (SYMRᵢ) of the received frame correspond to known symbols (S1, S2) of the transmitted frame and/or are decodable symbols (FCHi) that can be decoded without knowing the transfer function of the transmission channel.

16. Receiver according to Claim 15, in which the estimation means (MEST) are configured to perform a decoding of a decodable symbol received, a re-encoding of this decoded symbol so as to obtain a re-encoded symbol and a determination of the transfer function associated with this decodable symbol received, on the basis of the said re-encoded symbol and of the said decodable symbol received.

17. Receiver according to one of Claims 13 to 16, in which the signal is modulated according to an OFDM modulation.

18. Receiver according to one of Claims 13 to 17, in which the transmission channel is an electrical line, the signal is intended to be conveyed by power line communications and the cyclo-stationarity period (PC) of the channel is half the period of the alternating current intended to flow on the said electrical line.

19. Receiver according to Claim 18, in which the analogue channel signal complies with the PLC-G3 standard.

20. Receiver according to Claims 15 and 19, in which each frame received (TRM) comprises a preamble (PRM) followed by a header (HD) followed by a useful field (PLD) and the said reference symbols comprise the symbols of the header (FCHᵢ) and two symbols of the useful field corresponding to two known symbols (S1, S2) of the transmitted frame.

21. Receiver according to Claims 14 and 20, in which M is equal to 15, N is equal to 7, and the formulation means (MLB) are configured to perform the pairwise averages of fourteen successive transfer functions of the said initial sequence so as to obtain the N transfer functions.

22. Receiver according to one of Claims 13 to 21, in which the decoding means (MDCD) are configured to use successively and cyclically the transfer functions of the sequence of N transfer functions so as to decode the symbols following the last reference symbol.

23. Receiver according to Claim 22, in which when the duration of the N time slices is different from the cyclo-stationarity period, the decoding means (MDCD) are configured to periodically perform a shift of transfer function in the successive and cyclic use of the transfer functions so as to decode the symbols following the last reference symbol also comprises.

24. Receiver according to Claim 22 or 23, in which the signal is intended to be conveyed by power line communications, the cyclo-stationarity period of the channel is half the period of the alternating current intended to flow on the said electrical line, the input stage (ET1) is configured to deliver furthermore a reference signal (ZCS) at each zero crossing of the said alternating current, and the estimation means (MEST) are configured to adjust the value of the cyclo-stationarity period of the channel on the basis of the occurrences of the said reference signal.
